# FASCICULE DE BREVET EUROPEEN

(11) **EP 0 738 675 B1**
(45) Date de publication et mention de la délivrance du brevet: **22.07.1998**
(21) Numéro de dépôt: 96105941.7
(22) Date de dépôt: 16.04.1996
(51) Int. Cl.: B65G 49/06, B65G 1/10, B65G 1/133

(54) **Magasin à chariots mobiles portant des châssis inclinés**
Lagerung mittels mobiler Wagen mit geneigtem Chassis
Storage device with mobile wagons having inclined frames

(30) Priorité: 20.04.1995 IT VI950063
(43) Date de publication de la demande: 23.10.1996
(73) Titulaire: Piazza, Antonio, 36015 Schio (Vicenza) (IT)
(72) Inventeur: Piazza, Antonio, 36015 Schio (Vicenza) (IT)
(74) Mandataire: Bettello, Luigi, Dott. Ing.

(56) Documents cités:
- EP-A- 0 588 394
- EP-A- 0 620 171
- AT-B- 348 930
- FR-A- 2 380 962

## Description

La présente invention a pour but de réaliser un magasin à chariots porteurs mobiles sur lesquels sont montés des châssis inclinés aptes à porter des produits de forme plate tels que des plaques de verre ou autre matériau, mais aussi des châssis pour objets d'une forme différente, le magasin comprenant un socle et des rails pour le déplacement des chariots, selon le préambule de la revendication 1, (EP-A-0 588 394).

L'invention a pour but de simplifier le prélèvement ou l'insertion des objets en tous points de l'installation.

Le magasin à chariots mobiles suivant l'invention est défini à la revendication 1.

L'invention sera décrite ci-après de façon plus détaillée à l'aide du dessin annexé sur lequel :
la figure 1 est une vue en perspective du magasin à chariots selon l'invention.
La figure 2 est une vue de côté de l'un des chariots avec un châssis incliné ;
la figure 3 est une coupe verticale du châssis et du chariot.
La figure 4 est une coupe verticale du châssis avec vue partielle du groupe de translation manuelle des chariots ;
la figure 5 est une vue partielle en élévation du groupe de translation automatique des chariots ;
la figure 6 est la vue en plan correspondante.
La figure 7 est une vue de côté en élévation montrant une variante d'exécution du dispositif de translation des chariots avec prise de ces chariots par dessous.
La figure 8 est une vue en plan d'une autre variante de translation des chariots, avec prise de ces chariots par le côté.
La figure 9 est une vue de côté partiellement en coupe représentant un moyen de translation du chariot, en position d'accrochage ;
la figure 10 représente le même moyen en position de fin d'accrochage ;
la figure 11 montre le même dispositif vu en plan, en position d'accrochage.
Les figures 12, 13 et 14 sont respectivement des vues de côté, en élévation avant et en plans illustrant une autre forme particulière de réalisation des moyens de transfert longitudinal des chariots.

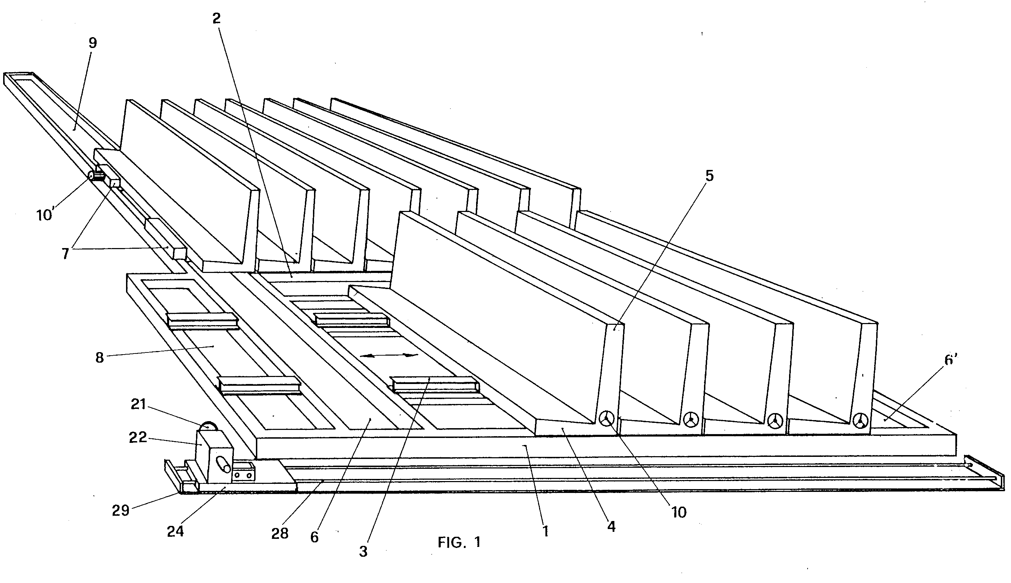

Dans la forme particulière de réalisation représentée sur la figure 1, le magasin est formé d'au moins deux socles 1 et 2 munis de rails 3 qui y sont superposés et qui permettent au chariot 4 portant les châssis 5, avantageusement inclinés, de coulisser longitudinalement aussi bien dans un sens que dans le sens opposé.

Les socles sont reliés entre eux à leurs extrémités opposées par deux glissières transversales parallèles 6, 6' portant des moyens de transfert 7, dans le but de transférer d'un socle à l'autre les chariots porteurs de châssis, qui ont été montés sur ces moyens de transfert.

Une ou plusieurs stations de stationnement 8 et 9, qui portent elles aussi des rails, sont prévues à l'extérieur de la partie des socles delimitée par les glissières 6, 6' pour permettre le prélèvement et le dépôt de la matière à stocker, en permettant ainsi de transférer en même temps les chariots d'un socle à l'autre le long des glissières transversales prévues.

La commande du mouvement et du transfert des chariots individuels peut s'effectuer en les poussant à la main, ou encore par l'intermédiaire d'une commande à volant, ou encore par l'intermédiaire de groupes motorisés convenablement disposés.

Lorsqu'on a prévu le déplacement par volant, des volants appropriés 10 et 10' sont montés respectivement sur les chariots 5 et sur les groupes de transfert 7, qui sont mobiles le long des glissières 6 et 6', pour déplacer les chariots d'un socle à l'autre.

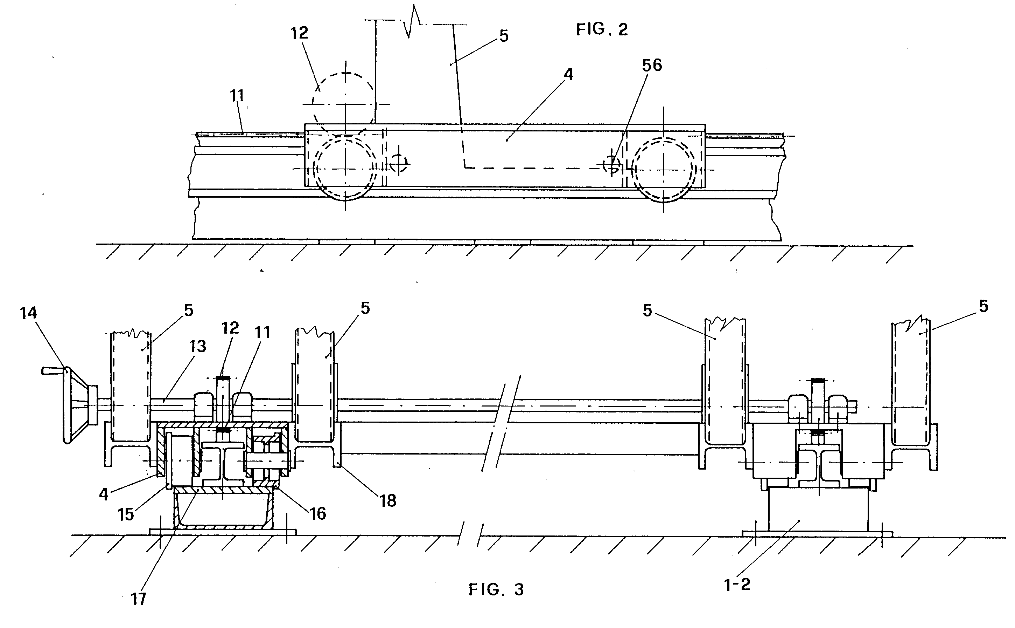

Sur les figures 2 et 3, on peut mieux voir les détails relatifs aux moyens d'avance des chariots 4 portant les châssis inclinés 5, qui comprennent par exemple des crémaillères 11 avec lesquelles engrènent des roues dentées 12 montées sur un arbre 13, lequel est entraîné en rotation, par exemple au moyen du volant 14.

Des roues à boudin 15 et 16, qui se déplacent sur les rails de guidage 17 et qui font partie des châssis de base 1 et 2, permettent de déplacer les chariots 4, cependant qu'il est prévu des galets anti-renversement 56.

La présence des paires de roues à boudin 15 et 16 sur les flancs des rails de guidage 17 assure une plus grande stabilité au mouvement des chariots 4.

De robustes poutres 18 raidissent les chariots 4, en leur permettant de porter des matières très lourdes, qui y sont déposées et appuyées sur les châssis 5.

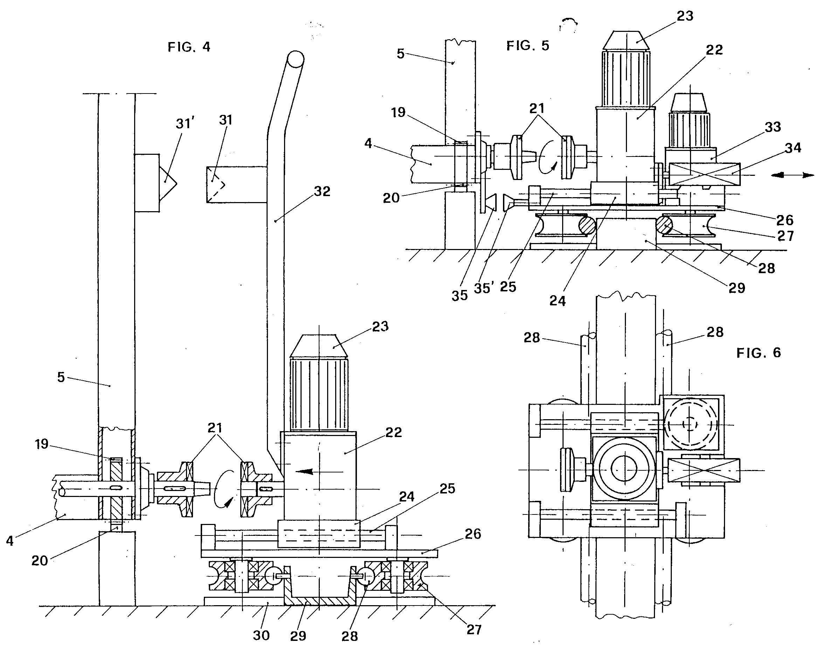

Dans la forme de réalisation représentée sur la figure 4, le chariot 4 qui porte le châssis 5 est muni de roues dentées 19, mobiles sur les crémaillères 20 et mises en rotation par l'accouplement 21, lequel est commandé par le mécanisme 22 actionné par le moteur électrique 23, le tout étant monté sur le coulisseau 24, mobile le long des arbres 25 qui sont à leur tour montés sur la plaque 26, laquelle est munie vers le bas des rouleaux de guidage 27 qui circulent sur les rails 28 placés sur les flancs du profité 29 solidaire de la plaque de base 30.

Une broche appropriée, montée sur le manipulateur 32 solidaire du mécanisme 22, présente une cavité axiale conique 31 qui coopère avec la pointe 31' solidaire du chariot 5, en assurant la précision de l'accouplement entre le manipulateur 32 et le châssis 5 et en réalisant de cette façon un positionnement exact de l'accouplement 21.

Dans la forme de réalisation représentée sur les figures 5 et 6, et qui est en outre visible sur la figure 4, le chariot 4 portant le châssis 5 est muni de roues dentées 19 mobiles sur les crémaillères 20 et mises en rotation par l'accouplement 21, lequel est commandé par le groupe 22 actionné par le moteur électrique 23, le tout étant monté sur le coulisseau 24 mobile le long des barres 25 solidaires de la plaque 26, laquelle est munie de rouleaux de guidage 27 qui roulent sur les rails 22 placés sur les flancs du profilé 29.

Un groupe motorisé 33 approprié permet le transfert du système, guidé longitudinalement par les rails 28.

Un vérin pneumatique ou hydraulique 34, actionné par le dispositif électromécanique ou électronique, tel que, par exemple, une cellule photoélectrique 35-35', déplace le mécanisme mobile 22 de manière à réaliser l'assemblage parfait de l'accouplement 21.

Naturellement, il peut être prévu plusieurs groupes de translation le long de la même ligne de travail.

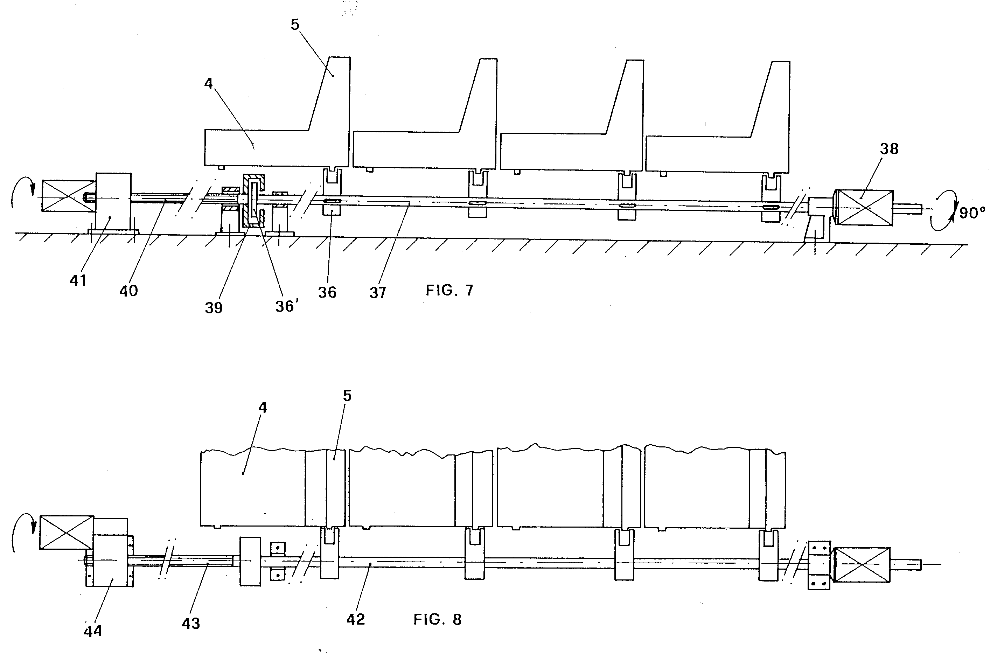

Sur la figure 7, on peut voir un dispositif de translation multiple des chariots 4 qui portent tes châssis inclinés 5 avec un arbre 36 monté sous tes chariots et avec des éléments de prise 37 que le groupe de commande 38 fait tourner de 90° pour pouvoir libérer ou attaquer les chariots.

L'arbre 36, solidaire du disque 36', est entraîné par l'accouplement 39 solidaire de l'arbre fileté 40 mis en rotation par le groupe motorisé 41, qui a pour fonction de déplacer ainsi l'arbre 36, conjointement avec les chariots 4 qui y sont accrochés.

Sur la figure 8, l'arbre 42, entraîné par l'arbre fiteté 43, lequel est commandé par te groupe 44, est disposé sur le côté des chariots 4.

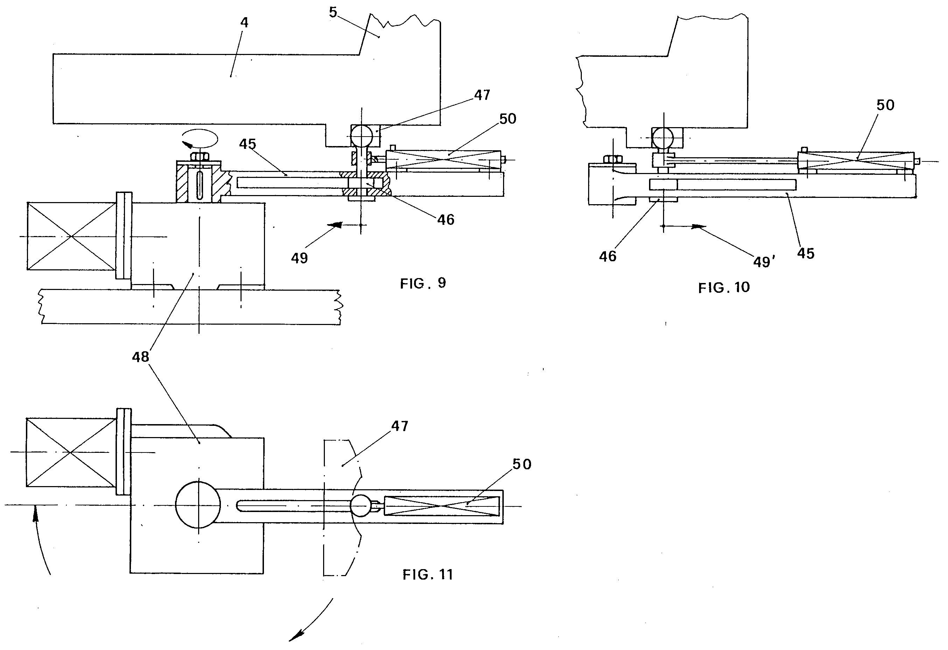

Les figures 9 et 11 représentent un autre système d'accrochage et de translation des chariots 4 qui portent les chariots inclinés 5, ce système comprenant une came rainurée particulière 45 à l'intérieur de laquelle se meut le moyeu à tête sphérique 46 qui se déplace lorsqu'après avoir accroché le coulisseau 47 portant le chariot 4, la came est mise en rotation par le groupe de commande motorisé 48.

Comme représenté sur les figures 10 et 11, la came 45, en tournant de 180°, commande la course du moyeu à tête sphérique 46 dans le sens des flèches 49-49' et, par conséquent, le déplacement prédéterminé du chariot.

Le vérin pneumatique ou hydraulique 50 rappelle le moyeu à tête sphérique 46 à sa position de départ après que la came 45 a été positionnée elle aussi dans sa position de départ, en tournant de nouveau de 180° de manière à se positionner pour accrocher le chariot suivant.

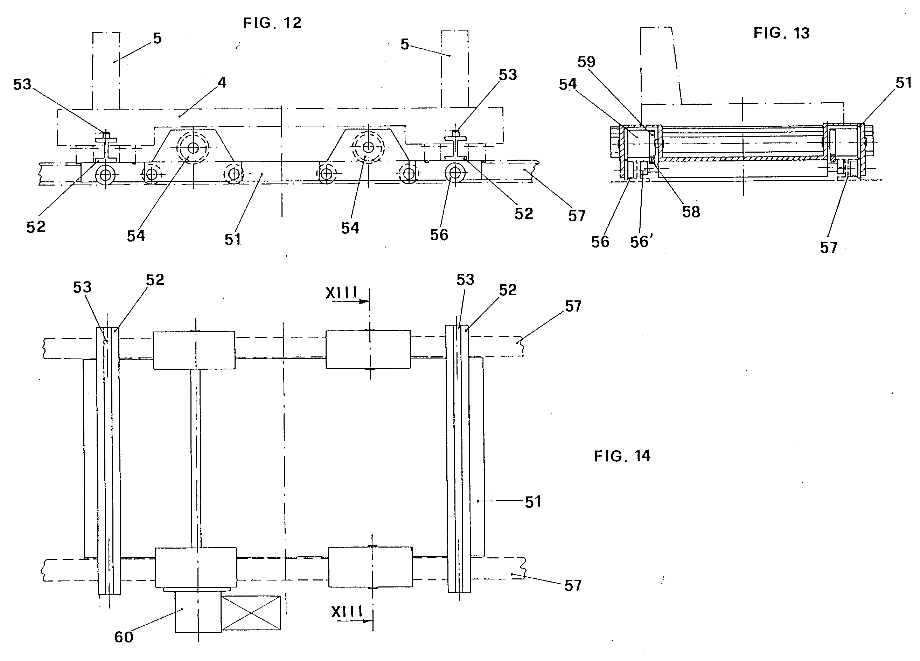

Dans la forme de réalisation représentée sur les figures 12, 13 et 14, on peut voir un organe de translation longitudinale des chariots 4 qui portent les châssis inclinés 5 montés sur une structure 51, laquelle porte les rails 52 et est munie en position supérieure de crémaillères 53. Des roues 54, ainsi que des galets anti-renversement 56-56', permettent le déplacement de l'organe de translation sur la structure 57, laquelle forme les glissières 6, 6' visibles sur la figure 1.

Il est prévu par ailleurs des crémaillères de guidage 58 sur lesquelles agissent les engrenages 59 solidaires de l'arbre de transmission du mouvement 60, cependant qu'il est aussi prévu un système particulier d'accrochage de sécurité du chariot, pour éviter que celui-ci ne puisse se déplacer latéralement pendant la translation longitudinale.

D'autres systèmes de sécurité sont prévus pour la protection du personnel préposé.

## Revendications

1. Magasin à chariots mobiles (4) portant des châssis inclinés (5) aptes à porter des produits de forme plate tels que des plaques de verre ou autres matériaux, mais aussi des châssis (5) pour objets d'une forme différente, le magasin comprenant un socle (1, 2) et des rails (3) pour le déplacement des chariots (4), caractérisé en ce que le magasin est formé d'au moins deux socles (1, 2) qui portent des rails (3) reliés entre eux à leurs extrémités opposées par deux glissières transversales parallèles (6-6') dans lesquelles coulissent des moyens de transfert (7) dans le but de transférer d'un socle (1) à l'autre (2) les chariots (4) qui portent les châssis (5) qui ont été montés sur les moyens de transfert, tandis qu'une ou plusieurs stations de stationnement (8, 9), équipées elles aussi des rails (3), sont prévues à l'extérieur de la partie des socles (1, 2) délimitée par les glissières (6, 6') pour permettre de prélever ou de déposer la matière à stocker, en permettant ainsi en même temps de transférer les chariots (4) d'un socle (1) à l'autre (2) te long des glissières transversales (6, 6').

2. Magasin à chariots mobiles selon la revendication 1, caractérisé en ce que la commande du mouvement des chariots individuels s'effectue par poussée, à la main, par exemple à l'aide d'un volant.

3. Magasin à chariots mobiles selon la revendication 1, caractérisé en ce que la commande du mouvement des chariots individuels est réalisée à l'aide de groupes motorisés judicieusement agencés.

4. Magasin à chariots mobiles selon les revendications 1, 2 et 3, caractérisé en ce que des stations de stationnement (9) appropriées sont prévues dans le prolongement longitudinal des glissières transversales (6, 6') pour le stationnement des chariots (4), ainsi transférés à l'aide de chariots de translation (7), d'autres stations de stationnement (8) qui portent des rails (3) étant prévues dans le prolongement des socles, après les glissières latérales (6, 6') de manière que le chariot (4) présélectionné puisse stationner pour le chargement ou le déchargement de la matière.

5. Magasin à chariots mobiles selon ta revendication 1, caractérisé en ce que l'avance des chariots mobiles est réalisée à l'aide de crémaillères (11) avec lesquelles engrènent des roues dentées (12) solidaires des chariots (4) cependant que des roues à boudin (15 et 16) sont prévues sur les flancs du rail (17) pour offrir une meilleure stabilité de mouvement aux chariots (4).

6. Magasin à chariots mobiles selon la revendication 1, caractérisé en ce que le chariot mobile (4) qui porte le châssis incliné (5) est muni de roues dentées (19) mobiles sur des crémaillères (20) et mises en rotation par un accouplement (21) commandé par un mécanisme (22) actionné par un moteur électrique (23), le tout étant monté sur un coulisseau (24) qui est mobile le long d'arbres (25) solidaires d'une plaque (26) munie de rouleaux de guidage (27) qui circulent le long de rails (28) prévus dur les flancs d'un profité (29) solidaire de la plaque de base (30), une broche (21) spécialement prévue, montée sur un manipulateur (32) solidaire du mécanisme (22) précité présentant une cavité à tête conique qui coopère avec une pointe (32) solidaire du châssis (5), pour assurer la précision de l'accouplement entre le manipulateur (32) et le châssis (5), en réalisant ainsi l'assemblage précis de l'accouplement (21).

7. Magasin à chariots mobiles selon la revendication 1, caractérisé en ce que le chariot mobile (4) qui porte le châssis incliné (5) est muni de roues dentées (19), mobiles sur des crémaillères (20) et mises en rotation par un accouplement (21) commandé par un groupe (22) actionné par un moteur électrique (23), le tout étant monté sur un coulisseau (24), mobile le long d'arbres (25) solidaires d'une plaque (26) munie de rouleaux de guidage (27) qui circulent sur des rails (28) prévus sur le flanc d'un profilé (29), un groupe motorisé (33) spécialement prévu permettant le transfert du système dans la direction longitudinale sur des rails (28) tandis qu'un vérin hydraulique ou pneumatique (34) actionné par un dispositif électro-mécanique ou électronique tel qu'un micro-interrupteur ou une cellule photo-électrique (35), déplace le groupe (22) de manière à réaliser l'assemblage parfait de l'accouplement (21) étant entendu que plusieurs groupes de translation peuvent être prévus le long de la même ligne de travail.

8. Magasin à chariots mobiles selon la revendication 1, caractérisé en ce qu'un arbre (36) disposé au-dessous des chariots mobiles (4) et solidaire d'un disque (36'), est entraîné par un accouplement (39) solidaire d'un arbre fileté (40) mis en rotation par un groupe motorisé (41) qui a pour fonction de déplacer cet arbre (36) conjointement aux chariots (4) accrochés à cet arbre, par l'intermédiaire d'éléments de prise (37) qui sont mis en rotation de 90° par un groupe de rotation (38) pour pouvoir libérer ou accrocher les chariots.

9. Magasin à chariots mobiles selon la revendication 1, caractérisé en ce qu'un arbre (42) équipés de dispositifs d'accrochage (37) est disposé latéralement aux chariots mobiles (4) cependant qu'il est prévu un arbre fiteté (43) actionné par un moteur de commande (44) pour amener les chariots (4) dans la position désirée, par l'intermédiaire d'éléments de prise (37) qui sont mis en rotation de 90° par le groupe de rotation (38) pour pouvoir libérer ou accrocher les chariots (4).

10. Magasin à chariots mobiles selon la revendication 1, caractérisé en ce que le dispositif d'accrochage et de translation des chariots (4) comprend une came rainurée (45) à l'intérieur de laquelle circule un moyeu à tête sphérique (46) qui se déplace lorsqu'après avoir accroché un coulisseau (47) solidaire du chariot (4), ladite came d'un groupe de commande motorisé (48) est mise en rotation, cependant que ladite came (45), en tournant de 180°, réalise la course, (dans le sens des flèches 49-49' d'un moyeu à tête sphérique (46) et, par conséquent, le déplacement prédéterminé du chariot, vérin pnneumatique ou hydraulique (50) étant prévu pour rappeler ledit moyeu à tête sphérique (46) à sa position de départ après que la came (45) est revenue à la position de départ, en tournant de nouveau de 180°, de manière à se positionner pour accrocher le chariot (4) suivant.

11. Magasin à chariots mobiles selon la revendication 1, caractérisé en ce que le groupe de transfert longitudinal (7) des chariots (4) qui portent les châssis inclinés (5) est constitué par une structure (51) qui porte des rails (52) solidaires de crémaillères (53), cependant qu'il est prévu des roues (54) pour le déplacement du groupe de transfert le long de la structure (57) qui forme les glissières (6, 6') solidaires de roues dentées (59) qui circulent sur des crémaillères (58) mises en rotation par un groupe manuel ou motorisé (60), des roues anti-renversement (56 et 56') coopèrant avec les rails (57) assurant la stabilisation les mouvements des chariots (4).

## Claims

1. Shelf unit with mobile trolleys (4) carrying inclined chassis (5) adapted to carry products of a flat shape, such as panes of glass or other materials, but also chassis (5) for objects of a different shape, the shelf unit comprising a pedestal (1, 2) and rails (3) for the displacement of the trolleys (4), characterised in that the shelf unit is formed of at least two pedestals (1, 2) which carry rails (3) connected together at their opposite ends by two parallel transverse slides (6, 6') in which run means (7) for transferring from one pedestal (1) to the other (2), the trolleys (4) carrying the chassis (5) which have been mounted on the transfer means, whereas one or more parking bays (8, 9) also equipped with rails (3) are provided outside the pail of the pedestals (1, 2) defined by the slides so as to be able to remove or deposit the material to be stored as well as at the same time permitting transfer of the trolleys (4) from one pedestal (1) to the other (2) along the transverse slides (6, 6').

2. Shelf unit with mobile trolleys according to claim 1, characterised in that the movement control of the individual trolleys is effected by pushing, by hand, e.g. by means of a steering wheel.

3. Shelf unit with mobile trolleys according to claim 1, characterised in that the movement control of the individual trolleys is realised by the aid of motorised units judiciously adapted.

4. Shelf unit with mobile trolleys according to claims 1, 2 and 3, characterised in that suitable parking bays (9) are provided in the longitudinal extension of the transverse slides (6, 6') for the parking of trolleys (4), thus transferred with the aid of translational trolleys (7), other parking bays (8) carrying rails (3) being provided in the extension of the pedestals, after the lateral slides (6, 6'), so that the trolley (4) preselected can park for loading or unloading of the goods.

5. Shelf unit with mobile trolleys according to claim 1, characterised in that the feed of the mobile trolley is realised by racks (11), with which toothed wheels (12) mesh, which are rigidly connected to the trolleys (4), whereas the flanged wheels (15 and 16) are provided on the sides of the rail (17) to offer better stability of movement to the trolleys (4).

6. Shelf unit with mobile trolleys according to claim 1, characterised in that the mobile trolley (4) which carries the inclined chassis (5) is equipped with toothed wheels (19) mobile on rails (20) and set in rotation by a coupling (21) controlled by a mechanism (22) actuated by an electric motor (23), the whole assembly being mounted on a press ram (24), which is mobile along shafts (25) integral with a plate (26) equipped with guide pulleys (27) which run along rails (28) provided on the sides of a profile (29) integral with the base plate (30), a specially provided spindle (21) mounted on a handle (32) integral with the above-mentioned mechanism (22) having a cavity with a conical apex which co-operates with a point (32) integral with the chassis (5) in order to ensure precision of the coupling between the handle (32) and the chassis (5), thus forming the precise coupling assembly (21).

7. Shelf unit with mobile trolleys according to claim 1, characterised in that the mobile trolley (4) which carries the inclined chassis (5) is equipped with toothed wheels (19) mobile on racks (20) and set in rotation by a coupling (21) controlled by a unit (22) actuated by an electric motor (23), the whole assembly being mounted on a slide (24) mobile along shafts (25) integral with a plate (26) equipped with guide pulleys (27), which ran on rails (28) provided on the side of a profile (29), a motorised unit (33) specially provided permitting the transfer of the system in the longitudinal direction on rails (28), whereas a hydraulic or pneumatic jack (34) actuated by an electromechanical or electronic device such as a microswitch or photoelectric cell (35) displaces the unit (22) so as to realise the perfect assembly of the coupling (21), it being understood that a plurality of translation units can be provided along the same operating line.

8. Shelf unit with mobile trolleys according to claim 1, characterised in that a shaft (36) disposed below the mobile trolleys (4) and rigidly connected to a disc (36') is driven by a coupling (39) set in rotation by a motorised unit (41), whose function is to displace this shaft (36) jointly with the trolleys (4) meshing with this shaft via meshing elements (37), which are set in rotation through 90° by a rotation unit (38) in order to release or engage the trolleys.

9. Shelf unit with mobile trolleys according to claim 1, characterised in that a shaft (42) equipped with meshing devices (37) is disposed laterally with respect to the mobile trolleys (4), a threaded shaft (43) actuated by a control motor (44) being provided to bring the trolleys (4) into the desired position via meshing elements (37) which are set in rotation through 90° by the rotation unit (38) in order to be able to release or engage the trolleys (4).

10. Shelf unit with mobile trolleys according to claim 1, characterised in that the meshing and translation device of the trolleys (4) comprises a grooved cam (45), inside which runs a spherical-headed hub (46), which moves, having engaged a press ram (47) rigidly connected to the trolley (4), the cam of a motorised control unit (48) being set in rotation, whereas the cam 45 rotating through 180°, realises the course (in the direction of arrows 49, 49') of a spherical-headed hub (46) and, consequently, the predetermined displacement of the trolley, a pneumatic or hydraulic ram (50) being provided to recall the spherical-headed hub (46) to its starting position after the cam (45) has returned to its starting position by rotating again through 180° so as to be positioned to engage the following trolley (4).

11. Shelf unit with mobile trolleys according to claim 1, characterised in that the longitudinal transfer unit (7) of the trolleys (4) which carry the inclined chassis (5) is formed by a structure (51) which carries rails (52) rigidly connected to racks (53), whereas wheels (54) are provided for displacement of the transfer unit along the structure (57) which forms slides (6, 6') connected rigidly to toothed wheels (58) set in rotation by a manual or motorised unit (60), anti-reverse wheels (56 and 56') co-operating with the rails (57), ensuring stabilisation of the movements of the trolleys (4).

## Patentansprüche

1. Lagervorrichtung mit mit mobilen Wagen (4), die geneigte Chassis (5) tragen, welche geeignet sind, flache Gegenstände wie Platten aus Glas oder anderen Materialien oder auch Gegenstände anderer Form aufzunehmen, wobei die Lagervorrichtung einen Rahmen (1, 2) besitzt und Schienen (3) zur Verschiebung der Wagen (4), dadurch gekennzeichnet, daß die Lagervorrichtung aus wenigstens zwei Rahmen (1, 2) gebildet ist, die Schienen (3) tragen, welche an ihren entgegengesetzten Enden durch zwei parallele, querliegende Gleitschienen (6 - 6') miteinander verbunden sind, in denen Transportmittel (7) gleiten, um die Wagen (4) von einem Rahmen (1) auf den anderen (2) zu transportieren, die die Chassis (5) tragen, die auf die Transportmittel montiert worden sind, während eine oder mehrere Parkstationen (8, 9), die ihrerseits ebenfalls mit Schienen (3) ausgerüstet sind, außen an dem Teil der Rahmen (1, 2) angeordnet sind, der durch die Gleitschienen (6, 6') begrenzt ist, damit die zu lagernden Gegenstände herausgenommen oder abgesetzt werden können, und damit gleichzeitig die Wagen (4) von einem Rahmen (1) auf den anderen (2) entlang der querliegend angeordneten Gleitschienen (6, 6') transportiert werden können.

2. Lagervorrichtung mit mobilenen Wagen nach Anspruch 1, dadurch gekennzeichnet, daß die Bewegung zur Bewegung der einzelnen Wagen durch Schubkraft von Hand erfolgt, beispielsweise mittels eines Handrades.

3. Lagervorrichtung mit mobilen Wagen nach Anspruch 1, dadurch gekennzeichnet, daß die Bewegung der einzelnen Wagen mittels auf geeignete Weise angetriebener Maschinenaggregate erfolgt.

4. Lagervorrichtung mit mobilen Wagen nach den Ansprüchen 1, 2 und 3, dadurch gekennzeichnet, daß geeignete Parkstationen (9) in Längsrichtung der quer verlaufenden Gleitschienen (6, 6') zum Abstellen der Wagen (4) vorgesehen sind, die mit Hilfe der Verschiebewagen (7) transportiert werden und weitere Parkstationen (8), die Schienen (3) aufweisen, welche in den Verlängerungen der Rahmen, hinter den seitlichen Gleitschienen (6, 6') angeordnet sind, so daß der vorher ausgewählte Wagen (4) zum Be- und Entladen der Gegenstände parken kann.

5. Lagervorrichtung mit mobilen Wagen nach Anspruch 1, dadurch gekennzeichnet, daß die Fortbewegung der mobilen Wagen mittels Zahnstangen (11) erfolgt, die mit Zahnrädern (12) in Eingriff stehen, die fest mit den Wagen (4) verbunden sind, während mit einem Bund versehene Räder (15 und 16) an den Seitenflächen von Schienen (17) angeordnet sind, um den Wagen (4) eine bessere Bewegungsstabilität zu verleihen.

6. Lagervorrichtung mit mobilen Wagen nach Anspruch 1, dadurch gekennzeichnet, der der mobile Wagen (4), der das geneigte Chassis (5) trägt, mit Zahnrädern (19) ausgerüstet ist, die sich auf Zahnstangen (20) bewegen und durch eine Kupplung (21) in Drehung versetzt werden, die durch einen von einem Elektromotor (23) angetriebenen Mechanismus (22) gesteuert wird, wobei die gesamte Anordnung auf einem Schlitten (24) montiert ist, der sich entlang von Stangen (25) bewegt, welche mit einer mit Führungsrollen (22) versehenen Platte (26) fest verbunden sind, die auf schienen (28) umlaufen, die auf den Seiten eines Profils (29) angeordnet sind, das fest mit der Grundplatte (30) verbunden ist, wobei ein speziell vorgesehener Dorn (21), der auf einem Steuermanipulator (32) montiert ist, der mit dem vorgenannten Mechanismus (22) fest verbunden ist, eine Vertiefung mit konischem Kopf bildet, die mit einer Spitze (32) zusammenwirkt, die mit dem Chassis (5) fest verbunden ist, um die Präzision der Kupplung zwischen dem Steuermanipulator (32) und dem Chassis (5) zu gewährleisten, wodurch eine präzise Anordnung der Kupplung (21) gegeben ist.

7. Lagervorrichtung mit mobilen Wagen nach Anspruch 1, dadurch gekennzeichnet, daß der mobile Wagen (4), der das geneigte Chassis (5) trägt, mit Zahnrädern (19) versehen ist, die sich auf den Zahnstangen (20) bewegen und durch eine Kupplung (21) in Drehung versetzt werden, die durch ein von einem Elektromotor (23) angetriebenen Aggregat (22) gesteuert wird, wobei die gesamte Anordnung auf einem Schlitten (24) montiert ist, der sich entlang von Stangen (25) bewegt, die mit einer mit Führungsrollen (27) versehenen Platte (26) fest verbunden sind, welche auf Schienen (28) umlaufen, die an den Seiten eines Profils (29) angeordnet sind, wobei ein speziell vorgesehenes Motoraggregat (33) den Transport des Systems in Längsrichtung auf den Schienen (28) gestattet, während ein Hydraulik- oder Pneumatikzylinder (34), der durch eine elektro-mechanische oder elektronische Anordnung, wie beispielsweise einen Mikroschalter oder eine Photozelle, (35) betätigt wird, das Aggregat (22) derart verschiebt, daß eine perfekte Anordnung der Kupplung (21) gewährleistet ist, wobei selbstverständlich mehrere Verschiebe-Aggregate entlang ein und derselben Arbeitsrichtung vorgesehen werden können.

8. Lagervorrichtung mit mobilen Wagen nach Anspruch 1, dadurch gekennzeichnet, daß eine Welle (36), die unterhalb der mobilen Wagen (4) angeordnet und fest mit einer Scheibe (36') verbunden ist, von einem Kupplungselement (39) mitgenommen wird, das mit einer Gewindespindel (40) fest verbunden ist, die von einem Motoraggregat (41) in Drehung versetzt wird, das dazu dient, diese Welle (36) zusammen mit den in sie mit Mitnehmerelementen (37) eingehängten Wagen (4) zu verschieben, wobei die Mitnehmerelemente (37) durch eine Rotationsvorrichtung (38) um 90° gedreht werden, so daß die Wagen freigesetzt oder eingehakt werden können.

9. Lagervorrichtung mit mobilen Wagen nach Anspruch 1, dadurch gekennzeichnet, daß eine Welle (42), die mit Einhängevorrichtungen (37) ausgerüstet ist, an den Seiten der beweglichen Traggestelle (4) angeordnet ist, während eine Gewindespindel (43) vorgesehen ist, die durch einen Antriebsmotor (44) gesteuert wird, um die Wagen (4) mittels der Mitnehmerelemente (37) in die gewünschte Position mitzunehmen, welche durch ein Rotationsaggregat (38) in eine Drehung um 90° versetzt werden, um die Wagen (4) freizusetzen oder einhängen zu können.

10. Lagervorrichtung mit mobilen wagen nach Anspruch 1, dadurch gekennzeichnet, daß die Einhänge- und Verschiebevorrichtung für die Wagen (4) einen geschlitzten Arm (45) aufweist, in dem sich eine Nabe (46) mit kugelförmigem Kopf verschiebt, wenn dieser Arm durch ein motorgetriebenes Maschinenaggregats (48) in Drehung versetzt wird, nachdem er in einen fest mit dem Wagen (4) verbundenen Führungsblock (47) eingehängt ist, wobei besagter Arm (45) durch Drehung um 180° den Weg der Nabe (46) mit kugelförmigem Kopf (in Richtung der Pfeile 49 - 49'), und damit die vorbestimmte Verschiebung des Wagens realisiert und ein Pneumatik- oder Hydraulikzylinder, (50) vorgesehen ist, um die Nabe (46) mit kugelförmigem Kopf (46) in ihre Startposition zurückzuführen, nachdem der Arm (45) seine Startposition wieder eingenommen hat, indem er sich erneut um 180° gedreht hat, so daß er sich in einer Stellung befindet, um den nächstfolgenden Wagen (4) einzuhaken.

11. Lagervorrichtung mit mobilen Wagen nach Anspruch 1, dadurch gekennzeichnet, daß das Aggregat für den Längstransport (7) der Wagen (4), die die geneigten Chassis (5) tragen, durch ein Grundgerüst (51) gebildet wird, welches Schienen (52) trägt, die mit Zahnstangen (53) fest verbunden sind, wobei Räder (54) zur Verschiebung des Transportaggregats entlang des Gerüstes (57) vorgesehen sind, welches die Gleitschienen (6, 6') bildet, die mit Zahnrädern (59) fest verbunden sind, welche auf Zahnstangen (58) laufen, die durch ein Hand- oder Motoraggregat (60) in Drehung versetzt werden, wobei Anti-Umkehrräder (56 und 56') mit den Schienen (57) in Eingriff stehen, um die Stabilität der Bewegungen der Wagen (4) zu gewährleisten.
